# EUROPÄISCHE PATENTANMELDUNG

(11) **EP 0 961 191 A1**
(43) Veröffentlichungstag der Anmeldung: **01.12.1999**
(21) Anmeldenummer: 99108116.7
(22) Anmeldetag: 24.04.1999
(51) Int. Cl.: G05D 23/19, G05D 23/24, G05D 27/02, H05B 1/02, H05B 3/20, H05B 3/68, H05B 6/12

(54) **Anordnung zur Temperaturerfassung eines Kochbehälters**

(30) Priorität: 26.05.1998 DE 29809392 U
(71) Anmelder: E.G.O. ELEKTRO-GERÄTEBAU GmbH, 75038 Oberderdingen (DE)
(72) Erfinder: Bogdanski, Franz Dr., 75038 Oberderdingen (DE); Begero, Klaus, 75038 Oberderdingen-Flehingen (DE)
(74) Vertreter: Patentanwälte Ruff, Beier, Schöndorf und Mütschele

(57) **Zusammenfassung**

Beschrieben wird eine Anordnung zur Temperaturerfassung eines Kochbehälters (11) mit einer Auswerteelektronik (27) von Signalen für die Regelung einer Heizeinrichtung (13) für den Kochbehälter, wobei dem Kochbehälter ein innerer Sensor (24), insbesondere an den Innenbereich des Kochbehälters angrenzend, und ein äußerer Sensor (23), insbesondere in einer Meßdose (19) an dem Deckel (15) des Kochbehälters, zugeordnet sind. Wenigstens einer der Sensors (23, 24), ist ein Temperatursensor. Der äußere Sensor (23) und der innere Sensor (24) sind zusammengeschaltet und mit einem einzigen Eingang der Auswerteelektronik (27) verbunden. Die Auswerteelektronik (27) kann eine drahtlose Übertragung (28, 30) zu der Heizungseinrichtung (13) aufweisen.

## Beschreibung

### ANWENDUNGSGEBIET UND STAND DER TECHNIK

Die Erfindung betrifft eine Anordnung zur Temperaturerfassung eines Kochbehälters mit einer Auswerteelektronik für Signale für die Regelung einer Heizeinrichtung für den Kochbehälter.

Die DE-OS 41 22 430 beschreibt eine Anordnung zur Durchführung eines Verfahrens zur Regelung der Kochleistung für einen von einer Kochplatte beheizbaren Topf, bei der an dem Deckel des Topfes ein als Meßstrecke dienendes langes Meßrohr angeordnet ist. Kondensat, das sich bei einem Kochvorgang oder Siedevorgang im Meßrohr bildet, läuft in den Topf zurück. Des weiteren ist ein Temperaturfühler an der seitlichen Außenwandung des Meßrohres angeordnet und mit einem Kühler an die Umgebungsluft versehen. Sowohl Anordnung als auch Verfahren sind darauf ausgelegt, einen Kochvorgang mit ausreichend starker Wasserdampfbildung zu regeln, wobei eine Regelung bzw. Bestimmung der Innenraumtemperatur des Kochbehälters bei Wärmungsvorgängen deutlich unter dem Siedepunkt von Wasser durch in diesem Falle fehlende Kondensatbildung nicht möglich ist.

Des weiteren sind Vorrichtungen zur Wärmebehandlung von Nahrungsmitteln bekannt, bei denen in den Garraum Wasserdampf eingeführt wird, und niederschlagendes Kondensat durch einen Kondensatablauf mit Temperatursensor aus dem Garraum austritt.

### AUFGABE UND LÖSUNG

Der Erfindung liegt die Aufgabe zugrunde, eine Anordnung zur Temperaturerfassung für die Regelung der Heizleistung für einen Kochbehälter zu schaffen, die sowohl Erwärmungsvorgänge als auch Kochvorgänge einfach und zuverlässig regelbar macht, Nachteile des Standes der Technik vermeidet und universell einsetzbar ist.

Diese Aufgabe wird mit den Merkmalen des Anspruchs 1 gelöst. Die Verwendung von zwei Temperatursensoren ermöglicht eine Temperaturerfassung in jeweils von der Temperatur und der Art des zu regelnden Vorganges abhängigen Weise. Durch das Zusammenschalten wenigstens eines äußeren und eines inneren Sensors benötigt die Auswerteelekronik lediglich einen einzigen Eingang und kann einfach und somit sowohl kostengünstig als auch weniger störungsanfällig gehalten sein. Nachteile durch eine interne Selektion bzw. Zusammenschaltung von Sensorsignalen in der Auswerteelektronik werden vermieden. In weiterer Ausgestaltung kann der Kochbehälter mit einer Abdeckung bzw. einem Deckel versehen sein, an der die Öffnung und das Ansatzstück nach außen weisend angebracht sein können. Als Abdeckung bietet sich unter anderem entweder ein üblicher auflegbarer Deckel oder ein evtl. dichtend befestigbarer Deckel beispielsweise nach Art eines Dampfkochtopfes. Der wenigstens eine innere Sensor, der vorzugsweise als Temperatursensor ausgebildet ist, kann innen an der Abdeckung angeordnet sein. Bevorzugt ist eine Anbringung im Bereich der Öffnung bzw. des Ansatzstückes.

Wenigstens ein äußerer Sensor kann in wärmeleitender Verbindung zur Umgebung stehen, beispielsweise mit einer Kühlfläche, und insbesondere im Bereich der Außenseite des Ansatzstückes angeordnet sein. Somit kann der äußere Sensor sowohl dem Temperatureinfluß der Umgebung als auch der Innentemperatur des Kochbehälters ausgesetzt sein. Bevorzugt ist er im Strömungsweg von Luft oder evtl. Wasserdampf angeordnet, der durch die Öffnung und das Ansatzstück aus dein Kochbehälter austritt. Dadurch ist eine gute Wärmekopplung insbesondere an austretenden Wasserdampf gegeben. In weiterer Ausgestaltung kann das Ansatzstück als eine Art Meßdose ausgebildet sein, die das Innere des Kochbehälters mit der Umgebung verbindet und einen Auslaß für Luft oder Wasserdampf bildet. Neben einer Herstellung aus Metall bieten sich andere Materialien an, beispielsweise wärmebeständige Kunststoffe.

An einer Auslaßöffnung des Ansatzstückes kann ein diese überbrückender Steg o.dgl., bevorzugt mittig, vorgesehen sein. Wenigstens ein äußerer Sensor ist vorteilhaft an dem Steg, insbesondere an dessen Außenseite, angeordnet und somit entweder direkt oder durch den Steg bzw. dessen Fläche an aus dem Kochbehälter strömende Luft wärmeleitend angekoppelt.

Der äußere Sensor ist bevorzugt als Temperatursensor ausgebildet. Möglich ist in weiterer Ausgestaltung der Erfindung ein Dampf- bzw. Feuchtigkeitssensor, der durch das Feststellen von Feuchte oder Flüssigkeit, insbesondere an der Unterseite eines Steges an dem Ansatzstück, die Bildung von wasserdampf und dessen Kondensierung zumindest an dem Steg oder im Inneren des Ansatzstückes registriert.

Als Möglichkeiten der Zusammenschaltung von inneren und äußeren Sensoren werden reine Reihenschaltungen oder reine Parallelschaltungen bevorzugt. Als Sensoren kommen, neben einem Temperaturelement, das beispielsweise als Thermistor oder Wärmestrahlungsdetektor ausgebildet sein kann, Feuchtigkeitssensoren in Betracht. Besonders bevorzugt kommen Halbleiterelemente zum Einsatz. Für eine besonders unkomplizierte Ausführung von Temperatursensoren werden temperaturempfindliche Widerstände eingesetzt, welche vorzugsweise jeweils unterschiedliche Widerstands-Temperatur-Kennlinien aufweisen.

Die Sensoren sind gemäß einer vorteilhaften Ausgestaltung der Erfindung für verschiedene Meßbereiche bzw. Temperaturbereiche ausgebildet. Wenigstens ein innerer Sensor kann für niedrige Temperaturen, insbesondere zwischen 30°C und 80°C ausgebildet sein. Wenigstens ein äußerer Sensor kann für höhere Temperaturen, insbesondere zwischen 80°C und 100°C ausgebildet sein. Bevorzugt weist der innere Sensor eine flachere Widerstandskennlinie auf als der äußere, wobei der Unterschied in der Steigung zwischen zwei- und zehnmal so groß sein kann. Durch die Kennlinien können charakteristische Punkte oder Bereiche von Erwärmungs-Kennlinien des Kochbehälters samt eines ausgewählten Inhalts so unterteilt und unterschieden werden, daß sie eine ausreichend genaue Bestimmung dieser Punkte oder Bereiche ermöglichen. Die Punkte liegen dabei bevorzugt zwischen den Widerstands-Kennlinien.

In weiterer Ausgestaltung der Erfindung kann ein zusätzlicher Sensor an die Auswerteelektronik insbesondere an einen einzigen Eingang, und/oder die Zusammenschaltung der anderen Sensoren signalübertragend angeschlossen werden. Besonders vorteilhaft wird dieser zusätzliche Sensor in das Kochgut eingelegt bzw. eingesteckt. Dazu kann er lang und schmal, evtl. mit einer Spitze, sowie einem Anschlußkabel versehen sein. Ein solcher Kochgut-Sensor kann den Zustand, vorzugsweise als Temperatursensor die Temperatur, des Kochguts unmittelbar und direkt erfassen und an die Auswerteelektronik übertragen.

Die Auswerteelektronik ist bevorzugt außen an dem Kochbehälter anbringbar. Als vorteilhaft wird eine Anordnung in der Meßdose, also in unmittelbarer Nähe zu wenigstens dem äußeren Sensor angesehen. Die Auswerteelektronik ist mit einer Übertragungseinrichtung verbunden und überträgt mittels dieser ihre Signale an die Heizungseinrichtung direkt oder deren Regeleinrichtung. Die Übertragungseinrichtung kann ebenfalls in oder an der Meßdose angebracht sein, vorzugsweise jedoch an der Seite des Kochbehälters bzw. dessen Abdeckung. Bevorzugt wird eine drahtlose Übertragung, beispielsweise mittels einer Sendespule und einem gerichteten Ferritkern zur direkten Übertragung an eine Enpfangsspule, die der Heizungseinrichtung zugeordnet ist.

Eine Energieversorgung der Sensoren und/oder der Auswerteelektronik kann über eine eingesetzte Batterie o.dgl., bevorzugt im Bereich der Auswerteelektonik, sichergestellt sein. Beim Vorhandensein einer elektrisch betriebenen Übertragungseinrichtung wird vorzugsweise deren Energiequelle, die ebenfalls vorteilhaft eine Batterie ist, mitgenutzt.

Durch die Verwendung eines inneren und eines äußeren Sensors kann durch den inneren Sensor die Innenraumtemperatur im Kochbehälter und damit indirekt die Kochguttemperatur erfaßt werden. Dies eignet sich besonders für Erwärmungsvorgänge ohne Sieden oder Kochen. Ein äußerer Sensor registriert bevorzugt eine Dampfbildung im Kochbehälter durch das Niederschlagen von Dampf an dem Sensor oder in dessen unmittelbarer Umgebung. Da Wasserdampf wesentlich bessere Wärmespeicherungs- bzw. Wärmeleitungseigenschaften aufweist, liegt beim Kochen die Temperatur derjenigen Bereiche, an denen der Wasserdampf direkt vorbeiströmt oder Kondensat sich niederschlägt, bei knapp 100°C. Somit wird ein Siede- oder Kochvorgang vorteilhaft über den äußeren Sensor erfaßt und geregelt.

Die Erfindung läßt sich mit jeder beliebigen Heizungseinrichtung kombinieren, die entweder stufenlos oder taktend in ihrer Heizleistung verstellbar ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im folgenden näher erläutert. In den Zeichnungen zeigen:
- Fig. 1: Eine schematische Seitenansicht eines Kochtopfes mit einer erfindungsgemäßen Anordnung mit Meßdose in der Topfdeckelmitte,
- Fig. 2: einen Querschnitt durch eine Meßdose mit zwei Temperatursensoren gemäß einer Erfindungsvariante und
- Fig. 3: eine Draufsicht auf die Mefidose aus Fig. 2.

### DETAILLIERTE BESCHREIBUNG DES AUSFÜHRUNGSBEISPIELS

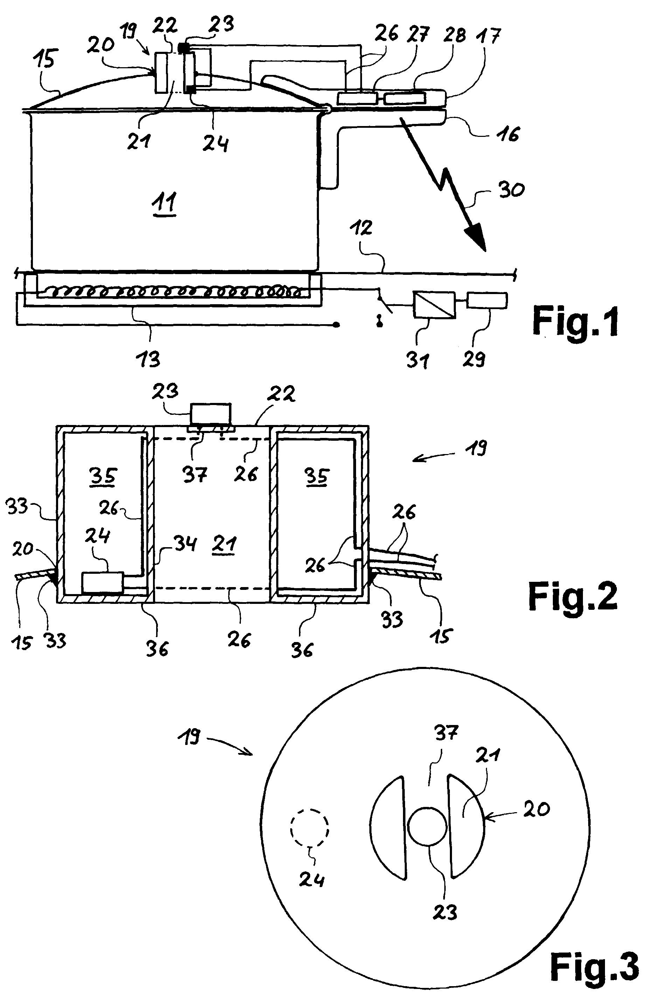

In der Fig. 1 ist ein Kochtopf 11 dargestellt, der auf einen Kochfeld 12, in diesem Falle bestehend aus einer Glaskeramikscheibe, über einer elektrischen Heizeinrichtung 13 aufgesetzt ist. Der Kochtopf 11 weist einen Deckel 15 sowie einen unteren Griff 16 auf, zu dem ein oberer Griff 17 des Deckels 15 korrespondierend angeordnet ist. In der Mitte des Deckels 15 befindet sich eine Meßdose 19 in einer Ausnehmung 20 des Deckels, die einen zentralen Durchgangskanal 21 sowie eine Auslaßöffnung 22 aufweist. An der Oberseite der Meßdose 19 ist, teilweise die Auslaßöffnung 22 überragend, ein äußerer Sensor 23 angeordnet. Ein innerer Sensor 24 ist in der inneren Doppelwandung der Meßdose 19 an deren Boden, der über dem Innenbereich des Kochtopfes 11 liegt, anliegend angeordnet. Über Anschlußleitungen 26 sind innerer Sensor 24 und äußerer Sensor 23 seriell verschaltet und an eine Auswerteelektronik 27 bzw. deren Eingang angeschlossen. Die Auswerteelektronik 27 wiederum ist mit einer Übertragungseinrichtung 28 signalübertragend verbunden, wobei sie in der Fig. 1 zusammen mit der Elektronik 27 in dem oberen Griff 17 untergebracht dargestellt ist.

Ebenso wie die Darstellung der Anschlußleitungen 26 und der Sensoren 22 und 23 sollen auch Elektronik 27 und Übertragungseinrichtung 28 lediglich als schematische Darstellung aufgefaßt werden. Während bei einer derartigen Ausführung mit Anordnung im Griff die Leitungen 26 in entsprechend dünnen Kabelkanälen vorzugsweise auf der Oberseite des Deckels 15 verlauten können, ist es ebenso möglich, die Auswerteelektronik 27 und die Übertragungseinrichtung 28 in der Nähe der Meßdose 19 oder in deren Inneren anzuordnen. Die Übertragungseinrichtung 28 enthält eine nicht dargestellte Energiequelle in Form einer Batterie oder eines wiederaufladbaren Akkumulators.

Die Übertragung der Signale von der Auswerteelektronik 27 an eine Regeleinrichtung 29 (mit Empfangseinrichtung) der Heizeinrichtung 13 ist in Fig. 1 durch eine Funkstrecke 30 angedeutet. Ebenso ist eine Übertragung durch ein Kabel o.dgl. sowie andere drahtlose Verfahren, wie beispielsweise eine IR-Übertragung, möglich. Eine Anordnung der Übertragungseinrichtung seitlich an dem Topf bzw. in oder an einem seitlichen Griff ermöglicht eine direkte und störungsärmere Übertragung zu einer unter dem Kochfeld angeordneten Empfangseinrichtung einer Regeleinrichtung oder in einer Regeleinrichtung für die Heizung.

Die Regeleinrichtung 29 ist mit einem Relais 31 verbunden, das die Energiezufuhr zu der Heizeinrichtung 13 aktivieren bzw. deaktivieren kann. Somit kann die Regeleinrichtung 29 nach Erhalt der ausgewerteten Signale von den Sensoren 23 und 24 die Energiezufuhr zur Heizung und zum Kochtopf und damit den Erwärmungsvorgang selber regeln.

Fig. 2 zeigt in Vergrößerung gemäß einem Aspekt der Erfindung eine Meßdose 19 entsprechend der Fig. 1, die in einer Ausnehmung 20 in dem Deckel 15 angeordnet ist. Die Befestigungsmöglichkeiten sind sehr vielfältig, eine Möglichkeit ist eine hier dargestellte Verlötung mit Hartlot 33, wozu die Meßdose 19 zumindest teilweise aus lötbarem Metall besteht. Der Schnitt durch die Meßdose zeigt deutlich den doppelwandigen Aufbau bei dieser Ausführungsform der Erfindung, bei der zwischen Außenwandung 33 und Innenwandung 34 eine umlaufende kreisringförmige Innenkammer 35 gebildet ist, die wiederum den zentralen Durchgangskanal 21 umschließt. In dem linken Teil der Innenkammer 35 ist am Boden der innere Temperatursensor 24 angeordnet, so daß er über diesen Boden 36 thermisch an das darunterliegende Innere des Kochtopfes 11 angekoppelt ist. Zur Verbesserung der thermischen Anbindung bzw. zur Erhöhung der Meßgenauigkeit kann beispielsweise der Boden 36 im Bereich des inneren Sensors 24 einen Durchbruch o.dgl. aufweisen, so daß der Sensor direkt mit dem Innenraum in Verbindung ist. Alternativ kann der Sensor 24 von unten an der Meßdose 19 bzw. dem Boden 36 angebracht sein. Selbstverständlich ist ebenso eine Anbringung an einem beliebigen Punkt an der Innenseite des Deckels möglich, wobei auf eine thermische Abkopplung des Sensors von dem Deckel geachtet werden sollte. Wichtig ist es, den inneren Sensor möglichst unabhängig von Einflüssen außerhalb des Kochtopfes zur möglichst genauen Messung seiner Innenraumtemperatur anzubringen.

Die Auslaßöffnung 22 des Kanals 21 weist einen sie überragenden Steg 37 auf, an dessen Oberseite der äußere Sensor 23 angeordnet ist. Dabei steht der Sensor 23 sowohl mit dem Steg 37 als auch mit seiner Umgebungsluft in wärmeleitender Verbindung.

Anschlußleitungen sind in Fig. 2 derart dargestellt, daß sie im rechten Bildteil auf dem Deckel 15 verlaufen, vorzugsweise gekapselt, in der Innenkammer 35 zu dem Sensor 24 und von dort zu dem Sensor 23 und wieder zurück geführt sind. Zu dem Sensor 23 hin verlaufen die Anschlußkabel 26 möglichst weit in der Innenkammer 35, und danach an der Unterseite des Steges 37 zu dem Sensor und wieder zu der Innenkammer zurück.

Die Fig. 3 zeigt die Anordnung aus Fig. 2 in Draufsicht, wodurch vor allem die Ausbildung des Steges 37 über der Auslaßöffnung 22 des Kanals 21 deutlich wird. Der Steg 37 verdeckt etwas weniger als die Hälfte der Auslaßöffnung 22, so daß eine ausreichende Menge an Luft bzw. Dampf aus dem Topf durch den Kanal 21 austreten kann. Möglich ist eine Ausführung ohne Steg, bei der beispielsweise der äußere Sensor 23 an dem Inneren der Innenwandung 34 angeordnet sein kann. Ebenso ist es möglich, die Auslaßöffnung 22 nicht zentrisch, sondern seitlich an dem Deckel anzuordnen, eventuell sogar am oberen Bereich der Wandung des Kochtopfes. Dabei sollten jedoch Topf- und Deckelform dergestalt gewählt sein, daß ein großer Teil der aus dem Topf ausströmenden Luft durch die Ausgangsöffnung entweichen muß, um vor allem im Fall von Dampfbildung eine genügende Wärmemenge an den äußeren Sensor zu bringen.

## Patentansprüche

1. Anordnung zur Temperaturerfassung eines Kochbehälters mit einer Auswerteelektronik von Signalen für die Regelung einer Heizeinrichtung für den Kochbehälter, wobei dem Kochbehälter (11) mindestens zwei Sensoren (23, 24) zugeordnet sind und:
- wenigstens ein Sensor ein Temperatursensor ist,
- der Kochbehälter (11) eine Ausnehmung (20) mit einem kurzen zylindrischen Ansatzstück (19) nach außen aufweist, an dem wenigstens ein äußerer Sensor (23) angeordnet ist,
- wenigstens ein innerer Sensor (24) an den Innenbereich des Kochbehälters (11) angrenzend angeordnet ist und
- wenigstens ein äußerer (23) und ein innerer Sensor (24) zusammengeschaltet sind und mit einem einzigen Eingang der Auswerteelektronik (27) signalübertragend verbunden sind.

2. Anordnung nach Anspruch 1, dadurch gekennzeichnet, daß der Kochbehälter (11) eine Abdeckung aufweist, an der vorzugsweise die Ausnehmung (20) und das Ansatzstück (19) angebracht sind, wobei insbesondere der wenigstens eine innere Sensor (24) innen an der Abdeckung, vorzugsweise im Bereich der Ausnehmung, angebracht ist.

3. Anordnung nach Anspruch 1 oder 2, dadurch gekennzeichnet, daß wenigstens ein äußerer Sensor (23) in wärmeleitender Verbindung, vorzugsweise mit einer Kühltläche, zu der Umgebung steht, und insbesondere im Bereich der Außenseite des Ansatzstücks (19) angeordnet ist, wobei er vorzugsweise am Ausgang eines durch einen Durchlaßkanal (21) gebildeten Strömungswegs angeordnet ist.

4. Anordnung nach einen der vorhergehenden Ansprüche, dadurch gekennzeichnet, daß das Ansatzstück als Meßdose (19) ausgebildet ist, die das Innere des Kochbehälters (11) mit der Umgebung verbindet, mit einem eine Auslaßöffnung (22) der Meßdose überbrückenden Steg (37), wobei vorzugsweise wenigstens ein äußerer Sensor (23) an dem Steg, insbesondere an der Außenseite, angeordnet ist.

5. Anordnung nach einem der vorhergehenden Ansprüche, dadurch gekennzeichnet, daß wenigstens ein innerer Sensor (24) und ein äußerer Sensor (23) ausschließlich in Reihenschaltung zusammengeschaltet sind.

6. Anordnung nach einem der Ansprüche 1 bis 4, dadurch gekennzeichnet, daß wenigstens ein innerer Sensor (24) und ein äußerer Sensor (23) ausschließlich in Parallelschaltung zusammengeschaltet sind.

7. Anordnung nach einen der vorhergehenden Ansprüche, dadurch gekennzeichnet, daß die Sensoren (23, 24) aus dem Bereich der Thermoelemente, Halbleiterelemente, Thermistoren, Feuchtigkeitssensoren oder Wärmestrahlungsdetektoren ausgewählt sind.

8. Anordnung nach Anspruch 7, dadurch gekennzeichnet, daß die Sensoren (23, 24) temperaturempfindliche Widerstände sind, die vorzugsweise unterschiedliche Widerstands-Temperatur-Kennlinien aufweisen, wobei insbesondere der innere Sensor (24) eine flachere Widerstandskennlinie aufweist als der äußere Sensor (23).

9. Anordnung nach einem der vorhergehenden Ansprüche, dadurch gekennzeichnet, daß die Sensoren (23, 24) für verschiedene Meßbereiche vorgesehen sind, vorzugsweise für verschiedene Temperaturbereiche, wobei insbesondere wenigstens ein innerer Sensor (24) für niedrige Temperaturen und wenigstens ein äußerer Sensor (23) für höhere Temperaturen ausgebildet ist.

10. Anordnung nach einem der vorhergehenden Ansprüche, dadurch gekennzeichnet, daß ein weiterer Sensor an die Auswerteelektronik signalübertragend anschließbar ist, der insbesondere als Kochgut-Sensor durch eine längliche Form in das Kochgut wenigstens teilweise einbringbar ausgebildet ist, wobei er vorzugsweise mit den anderen Sensoren (23, 24) zusammenschaltbar ist.

11. Anordnung nach einem der vorhergehenden Ansprüche, dadurch gekennzeichnet, daß die Auswerteelektronik (27) im Außenbereich des Kochbehälters (11), insbesondere in der Meßdose (19), angeordnet ist und mit einer Übertragungseinrichtung (28) verbunden ist, die die Signale der Auswerteelektronik an die Heizungseinrichtung (13) bzw. eine Regeleinrichtung (29) für die Heizungseinrichtung überträgt und insbesondere für eine drahtlose Übertragung, vorzugsweise mit einer Sendespule, ausgebildet ist.
